# EUROPEAN PATENT APPLICATION

(11) **EP 4 280 475 A1**
(43) Date of publication of application: **22.11.2023**
(21) Application number: 23173908.7
(22) Date of filing: 17.05.2023
(51) Int. Cl.: H04B 7/185

(54) **ULTRA-LOW GEOSTATIONARY EQUATORIAL ORBIT (ULGEO) SUNBELTS**

(30) Priority: 17.05.2022 US 202263342854 P; 06.07.2022 US 202263358589 P
(71) Applicant: Sunlight Aerospace Inc., Rye, CO 81069 (US)
(72) Inventor: Cyrus, Michael, Golden, 80401 (US); Moussouris, John P., San Francisco, 94115 (US)
(74) Representative: Zimmermann & Partner Patentanwälte mbB

(57) **Abstract**

Methods, apparatuses and systems for providing renewable energy powered, continuous geostationary orbital communications include arranging a plurality of renewable energy powered unmanned aerial vehicles (UAVs) having ground and air communication capabilities in a belt configuration around the earth, spacing apart the plurality of UAVs to provide intercommunication between at least neighboring ones of the plurality of UAVs, and positioning the plurality of UAVs in a relatively stationary location above the earth at a height of between 12 to 15 miles.

## Description

### FIELD

Embodiments of the present disclosure generally relate to approximate geostationary orbital communications and in particular to methods, apparatuses, and systems for providing renewable energy powered, continuous geostationary orbital communications.

### BACKGROUND

Based on the location and positioning above the earth's surface, a system of satellites can provide communication services around the globe. Satellite systems, however, suffer from many deficiencies. For example, satellites in distinct orbital planes move at high relative velocities that challenge transceiver tracking. In addition, satellites are extremely vulnerable to military attack because fragments of one damaged satellite can damage many other satellites in the same orbital plane. In addition, satellites can suffer outages from solar flares and interference from the sun's radiation. In addition, satellites are costly to repair and upgrade and, as such, typically carry outdated technology.

### SUMMARY

Embodiments of methods, apparatuses and systems for providing renewable energy powered, continuous geostationary orbital communications are disclosed herein.

In some embodiments a method for providing renewable energy powered, continuous geostationary orbital communications includes arranging a plurality of renewable energy powered unmanned aerial vehicles (UAVs) having ground and air communication capabilities in a belt configuration around the earth, spacing apart the plurality of UAVs to provide intercommunication between at least neighboring ones of the plurality of UAVs, and positioning the plurality of UAVs in a relatively stationary location above the earth at a height of between 12 to 15 miles.

In some embodiments, at least one of the plurality of UAVs communicate with at least one satellite and the method further includes enhancing an aggregate bandwidth of a backhaul of the at least one satellite by providing communication services to the at least one satellite.

In some embodiments, the renewable energy powered UAVs are powered using at least one of solar power, wind energy, thermal energy, fuel cells, combustion motor-generator sets, or microwave energy and a position of at least one of the UAVs in the belt configuration can be altered to improve an amount of renewable energy provided to the at least one of the UAVs.

In some embodiments, the UAVS can be arranged in the belt configuration proximate the equator of the earth.

In some embodiments, at least one of the plurality of UAVs communicate with at least one ground device and the method can further include at least one of supplementing existing transoceanic optical fiber links, existing cell spectrum owners' networks, providing mobile services during emergencies to lower bandwidth voice and text, providing surveillance and imaging services, and offloading audio and video calls.

In some embodiments, at least two UAVs are positioned at each stationary location above the earth to provide communication redundancy.

In some embodiments, a system for providing renewable energy powered, continuous geostationary orbital communications includes a plurality of unmanned aerial vehicles (UAVs) arranged in a belt configuration around the earth, spaced apart to provide intercommunication between at least neighboring ones of the plurality of UAVs, and positioned in a relatively stationary location above the earth at a height of between 12 to 15 miles, wherein at least one of the UAVs comprises a system of renewable energy.

In some embodiments, at least one of the plurality of UAVs communicate with at least one satellite and the system enhances an aggregate bandwidth of a backhaul of the at least one satellite by providing communication services to the at least one satellite.

In some embodiments, the renewable energy system of the at least one UAV is powered using at least one of solar power, wind energy, thermal energy, fuel cells, combustion motor-generator sets, and microwave energy and a position of at least one of the plurality of UAVs in the belt configuration is altered to improve an amount of renewable energy provided to the at least one UAV.

In some embodiments, the plurality of UAVs are arranged in the belt configuration proximate the equator of the earth.

In some embodiments, the plurality of UAVs are spaced apart based on respective communication capabilities of each of the plurality of UAVs. For example, in some embodiments, the plurality of UAVs comprise free space optical communications and the plurality of UAVs are spaced apart by 200 miles. In some embodiments, the plurality of UAVs are spaced apart as far as possible to minimize a number of UAVs required to circle the earth.

Other and further embodiments in accordance with the present principles are described below.

### BRIEF DESCRIPTION OF THE DRAWINGS

Embodiments of the present disclosure, briefly summarized above and discussed in greater detail below, can be understood by reference to the illustrative embodiments of the disclosure depicted in the appended drawings. However, the appended drawings illustrate only typical embodiments of the disclosure and are therefore not to be considered limiting of scope, for the disclosure may admit to other equally effective embodiments.
Figure 1 depicts a high-level functional diagram of a system for providing renewable energy powered, continuous geostationary orbital communications in accordance with an embodiment of the present principles.
Figure 2 depicts a flow diagram of a method for providing renewable energy powered, continuous geostationary orbital communications in accordance with an embodiment of the present principles.
Figure 3 depicts an example strip/belt configuration of the present principles having FSO capabilities in accordance with an embodiment of the present principles.

To facilitate understanding, identical reference numerals have been used, where possible, to designate identical elements that are common to the figures. The figures are not drawn to scale and may be simplified for clarity. Elements and features of one embodiment may be beneficially incorporated in other embodiments without further recitation.

### DETAILED DESCRIPTION

Embodiments of the present principles generally relate to methods, apparatuses and systems for providing renewable energy powered, continuous geostationary orbital communications. While the concepts of the present principles are susceptible to various modifications and alternative forms, specific embodiments thereof are shown by way of example in the drawings and are described in detail below. It should be understood that there is no intent to limit the concepts of the present principles to the particular forms disclosed. On the contrary, the intent is to cover all modifications, equivalents, and alternatives consistent with the present principles and the appended claims. For example, although embodiments of the present principles will be described primarily with respect to particular numbers of renewable energy powered planes/UAVs arranged in a particular pattern, such teachings should not be considered limiting. Embodiments in accordance with the present principles can function with substantially any numbers of planes/UAVs (renewable energy powered or conventionally powered) arranged in substantially any order.

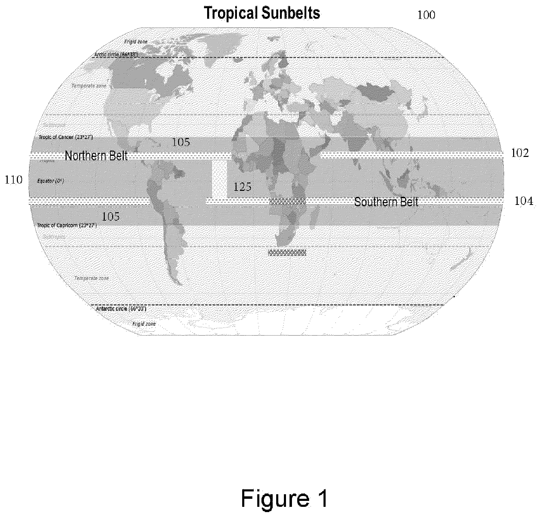

Figure 1 depicts a high-level functional diagram of a system for providing renewable energy powered, continuous geostationary orbital communications in accordance with an embodiment of the present principles. In the embodiment of Figure 1, a map representative of a flat view of the earth 100 displays two different views 102, 104 of a rectangular strip/belt 105 having dotted lines representative of a plurality of planes/UAVs, illustratively in the embodiment of Figure 1 planes/UAVs, capable of being solar powered, that stretch across the earth 100. In the embodiment of Figure 1, the first view 102 depicts the strip/belt 105 of solar capable planes/UAVs positioned north of the earth's equator 110 and the second view 104 depicts the strip/belt 105 of solar capable planes/UAVs positioned south of the earth's equator 110. In accordance with some embodiments, in the embodiment of Figure 1, ones of the strip/belt 105 of solar capable planes/UAVs can migrate seasonally, individually or as a whole, north and south of the earth's equator 110 to harvest maximal solar energy in a perpetual summer of sunniest days and shortest nights.

For example, in some embodiments of the present principles such as the embodiment of Figure 1, a latitude for greatest solar energy migrates seasonally between the tropics of Cancer and Capricorn. However, insolation remains high year-round in the semitropic belt relative to latitudes further from the equator. Optimal longitudes depend upon securing sovereign overflight rights, possibly in exchange for discounted emergency or other services. The northern belt 102 illustrates transoceanic overflight at almost all longitudes except central Africa, and the southern belt 104 illustrates oceanic overflight except mostly southern Africa and Brazil. In a worst case for example of no central African overflight, longitudinal bands such as the southern Atlantic band 125 or an even longer longitudinal band reaching around South Africa can route bandwidth into the southern belt. Latitudinal flexibility expands as the economies and number of planes improve and enables fleets of planes to circulate within a very wide sunbelt.

Although in the embodiment of Figure 1, the planes/UAVs are illustratively planes capable of being solar powered, in other embodiments, the planes/UAVs can alternatively or in addition possess other renewable energy capabilities, including but not limited to wind energy, thermal energy, fuel cells, combustion motor-generator sets, microwave energy and others. In such embodiments, the planes/UAVs of the strip/belt 105 can be migrated, individually or as a group, to locations/positions around the earth 100 (i.e., within their positions in the strip/belt) which optimize the applicable renewable energy capabilities (i.e., positions of higher winds, temperature, etc.).

In accordance with the present principles, the planes/UAVs of a strip/belt of the present principles are capable of providing communication services with ground devices as well as air devices, including satellite systems. A strip/belt of planes/UAVs of the present principles can generally include a plurality of unmanned airborne vehicles (UAVs) (e.g., as described in at least one of US Patent Serial No. 8,448,898, issued May 28, 2013 to Frolov, et al.*,* and entitled, "Autonomous Solar Aircraft" or US Patent Serial No. 9,596,020, issued May 28, 2013 to Frolov, et al., and entitled, "Methods for Providing Distributed Airborne Wireless Communications"), which are herein incorporated by reference in their entireties.

In some embodiments, the planes/UAVs of the present principles are flown at a substantially stationary position located above the earth's surface to provide continuous geostationary orbital communications in accordance with the present principles. For example, in some embodiments, the planes/UAVs can be positioned at altitudes of between 12-15 miles above the earth's surface, which can supply very wide area coverage. At such altitudes, the planes/UAVs of the present principles will not be negatively affected by the Sun's radiation, will not be typically affected by bad weather, and can take advantage of the Sun's rays for providing power to the planes/UAVs.

Distances between different UAVs may vary and depend on their communication capabilities and requirements for communication services they provide. For example, in some embodiments, the planes/UAVs of a strip/belt of the present principles are located in the strip/belt such that each plane/UAV is at or near an edge of its communication capabilities to minimize a number of planes/UAVs required in the strip/belt to provide continuous geostationary orbital communications. For example, in some embodiments of the present principles, communication links for the planes/UAVs can be provided by either directional RF antennas or free-space optical (FSO) interconnections, e.g., using telecom-grade lasers operating at about 1300 to about 1600 nm. The communication links can be point-to-point links, although multiple access links (e.g. WiFi or WiMAX) can also be used, especially between planes/UAVs in close proximity. As such and as described above, a distance between planes/UAVs of a strip/belt of the present principles can depend on the communication capabilities of the planes/UAVs. For example, planes/UAVs having FSO interconnections can fly at a distance of 200 miles between them with a reasonable ~1.25 mi sag in line-of-site altitude. As such, in 3-plane formations, the number of planes for a strip/belt of the present principles circling the earth is then <400. The build and launch costs for such a strip/belt of the present principles would be a very small fraction of satellite constellations.

In some embodiments, transoceanic belts of planes can effectively enhance the bandwidth of oceanic optical fiber links that are disastrously vulnerable to wartime attack at a single point of failure. In this application, transceiver and other payload power would be dedicated for maximum transoceanic bandwidth. Free-space optical and electromagnetic channels between planes have approximately 40% lower transmission delays than typical glass fiber and are more resilient to attack and cheaper to repair and replace than suboceanic cables. They also can easily create records of attack in violation of treaty agreements, in contrast to surreptitious attacks on suboceanic cables.

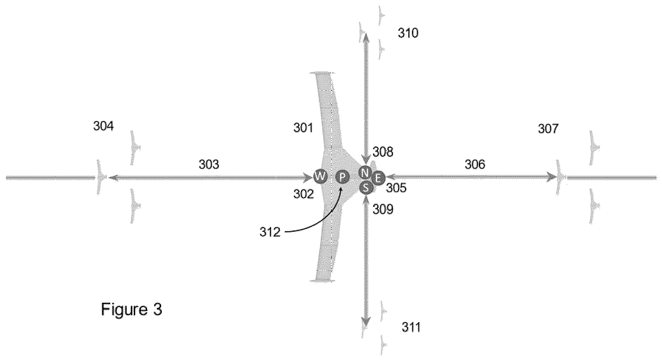

For example, Figure 3 depicts an example strip/belt configuration of the present principles having FSO capabilities in accordance with an embodiment of the present principles. The embodiment of Figure 3 includes a Solar UAV 301 having a west facing FSO transceiver 302 linking over path 303 (~200 mi) to an eastern portion 304 of a westward formation and an east facing FSO transceiver 305 linking over path 306 (~200 mi) to a western portion 307 of the westward formation. The configuration of Figure 3 further includes north and south facing FSO transceivers 308 and 309, respectively, linking to north and south formations 310 and 311, respectively. The embodiment of Figure 3 further includes a payload 312 that can include other transceivers (not shown) such as satellite and cell stations to ground.

Although the described communication capabilities of the planes/UAVs of a strip/belt of the present principles can enable high bandwidth (e.g., >40Gbps), such large bandwidths are not required. In some embodiments of the present principles, the planes/UAVs can have communication systems with bandwidths as low as <100Mb/s. Embodiments of the present principles can provide services, including but not limited to, enhancing the aggregate bandwidth of satellite backhaul by providing communication services to satellites, supplementing existing cell spectrum owners' networks (i.e., planes/UAVs can provide reliable mobile connection in coverage gaps), providing above-the-weather planes/UAVs for providing, for example, disaster-proof mobile services even if limited during emergencies to lower bandwidth voice and text, providing surveillance and imaging services, which have modest bandwidth requirements (i.e., a plane/UAV can multicast aerial images of traffic directly to self-driving cars or delivery vans to minimize delays and accidents, without load on backhaul), offloading audio and video calls and other "local" services across relatively wide coverage areas (i.e., planes/UAVs can multicast control packets from multi-user games or VR within a region at ultra-low latency without consuming backhaul bandwidth), and the like.

Since cell usage over oceans is minimal, in some embodiments such located planes/UAVs can devote most payload weight and power to east and west links/UAVs within a strip/belt of the present principles and at least one upward-facing link to satellites, in such instances functioning as an Ultra-Low Geostationary Equatorial Orbit (ULGEO) component of a satellite constellation, especially during times of satellite outage - e.g. from flares or military attack.

Communication services provided by embodiments of the present principles can be continuous or substantially continuous, e.g., 24 hours a day, 7 days a week, year-round, etc. Alternatively or in addition, such services can be intermittent or temporary (i.e., one or more of only daytime operations, emergency support, peak demand services, etc).

Compared to terrestrial cell and web equipment and solar farms needed to power them sustainably, planes/UAVs of the present principle by their location/positioning are able to gather 40% more sunlight on a cloudless day, and far greater than 40% more over cloud cover and cloudy days. In some embodiments, propulsion power required for the planes/UAVs can be offset by cooling and gravitational energy harnessed by climbing during the day and gliding down at night.

In some embodiments of the present principles, at least two UAVs are positioned at each stationary location above the earth to provide communication redundancy. In such embodiments, the UAVs can include a distributed communication payload configuration, as described in at least commonly owned US patent application Serial No. 14/462,167, filed August 18, 2014, by Frolov, which is herein incorporated by reference in its entirety.

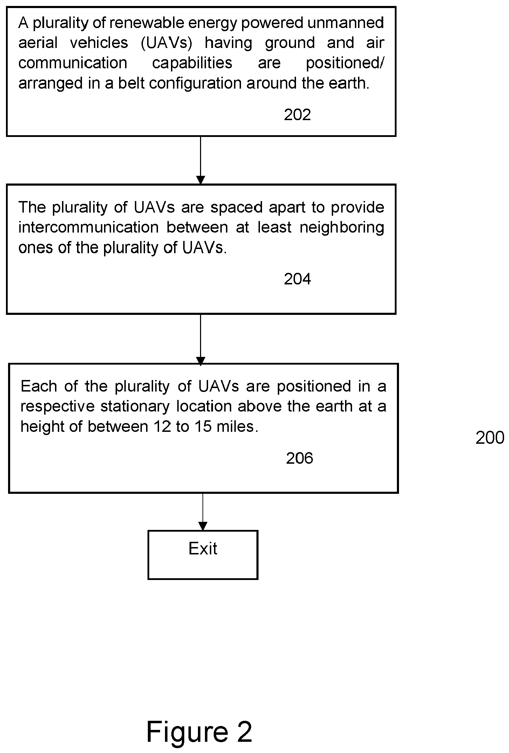

Figure 2 depicts a flow diagram of a method 200 for providing renewable energy powered, continuous geostationary orbital communications in accordance with an embodiment of the present principles. The method 200 can begin at step 202 during which a plurality of renewable energy powered unmanned aerial vehicles (UAVs) having ground and air communication capabilities are positioned/arranged in a belt configuration around the earth. As described above, in some embodiments, the renewable energy powered UAVs can include but are not limited to UAVs having at least one of solar power capabilities, wind energy, thermal energy, fuel cells, combustion motor-generator sets, microwave energy and others. In some embodiments, a location of at least one of the plurality of UAVs of the belt of the renewable energy powered UAVs is altered to improve/maximize an amount of renewable energy provided to at least one UAV. Additionally and as described above, in some embodiments, at least one of the plurality of UAVs can communicate with at least one satellite to enhance an aggregate bandwidth of a backhaul of the at least one satellite by providing communication services to the at least one satellite. The method 200 can proceed to 204.

At 204, the plurality of UAVs are spaced apart to provide intercommunication between at least neighboring ones of the plurality of UAVs. As described above, in some embodiments the UAVs are spaced apart at a distance that is near or at the communication distance limit of the UAV. As described above, in some embodiments, the UAVs are separated by as large a distance as possible while still being able to communicate with at least one neighboring UAV to reduce/minimize a number of UAVs required to circle the earth. For example, and as described above, in some embodiments in which a UAV comprises FSO communication capabilities, such UAVs of a strip/belt of planes/UAVs of the present principles can be spaced at a distance of 200 miles. In such embodiments, in 3-plane formations, the number of planes for a strip/belt of the present principles circling the earth is then <400. Such configuration of planes/UAVs of the present principles can also have a sag of ~1.25 mi in altitude. The method 200 can proceed to 206.

At 206, the plurality of UAVs are positioned in a stationary location above the earth at a height of between 12 to 15 miles. As described above, in some embodiments, a height of at least one of the UAVs of the belt of renewable energy powered UAVs can be altered within the 12 to 15 mile region to improve/maximize an amount of renewable energy provided to the at least one UAV. The method 200 can be exited.

In accordance with some embodiments of the present principles, UAVs are designed small and robust enough to survive turbulence between high altitude and takeoff and landing. For example, in some embodiments the UAVs are designed to withstand forces of up to 7g. For example, in some embodiments, in order to survive forces from 7g acceleration in turbulence, a UAV/plane of the present principles can fly individually with modest wing spans of less than 20m between high altitude and takeoff and landing. In alternate embodiments, however a UAV/plane of the present principles can synthesize aerodynamics of larger wingspans of effectively 60m by assembling into modest formations once they reach near-space altitudes that are less subject to turbulence.

In some embodiments of the present principles, within each formation, UAVs communicate with multicast wireless protocols, such as WiFi or WiMAX. In such embodiments, the UAVs can exchange geolocation data such as differential GPS, drive train, battery, and payload status, and communication data so that transceivers in each of the cardinal directions can be active in one UAV at a given time within each formation in order to mitigate interference and optimize power.

While the foregoing is directed to embodiments of the present disclosure, other and further embodiments of the disclosure may be devised without departing from the basic scope thereof.

### Reference numerals

100 earth
102 first view
104 second view
105 strip/belt
110 earth's equator
125 path
200 method
202 step
204 step
206 step
301 Solar UAV
302 west facing FSO transceiver
303 linking over path
304 eastern portion
305 east facing FSO transceiver
306 linking over path
307 western portion
308 north facing FSO transceivers
309 south facing FSO transceivers
310 north formations
311 south formations
312 payload

## Claims

1. A method for providing renewable energy powered, continuous geostationary orbital communications, comprising:
arranging a plurality of renewable energy powered unmanned aerial vehicles, UAVs, having ground and air communication capabilities in a belt configuration around the earth;
spacing apart the plurality of UAVs to provide intercommunication between at least neighboring ones of the plurality of UAVs; and
positioning the plurality of UAVs in a relatively stationary location above the earth at a height of between 12 to 15 miles.

2. The method of claim 1, wherein at least one of the plurality of UAVs communicate with at least one satellite and the method further comprises enhancing an aggregate bandwidth of a backhaul of the at least one satellite by providing communication services to the at least one satellite.

3. The method of claim 1 or 2, wherein the renewable energy powered UAVs are powered using at least one of solar power, wind energy, thermal energy, fuel cells, combustion motor-generator sets, or microwave energy.

4. The method of any of the preceding claims, wherein the UAVs are arranged in the belt configuration proximate the equator of the earth.

5. The method of any of the preceding claims, wherein a position of at least one of the UAVs in the belt configuration is altered to improve an amount of renewable energy provided to the at least one of the UAVs.

6. The method of any of the preceding claims, wherein at least one of the plurality of UAVs communicate with at least one ground device and the method further comprises at least one of supplementing existing transoceanic optical fiber links, existing cell spectrum owners' networks, providing mobile services during emergencies to lower bandwidth voice and text, providing surveillance and imaging services, and offloading audio and video calls.

7. The method of any of the preceding claims, wherein at least two UAVs are positioned at each stationary location above the earth to provide communication redundancy.

8. A system for providing renewable energy powered, continuous geostationary orbital communications, comprising:
a plurality of unmanned aerial vehicles, UAVs, arranged in a belt configuration around the earth, spaced apart to provide intercommunication between at least neighboring ones of the plurality of UAVs, and positioned in a relatively stationary location above the earth at a height of between 12 to 15 miles, wherein at least one of the UAVs comprises a system of renewable energy.

9. The system of claim 8, wherein at least one of the plurality of UAVs communicate with at least one satellite and the system enhances an aggregate bandwidth of a backhaul of the at least one satellite by providing communication services to the at least one satellite.

10. The system of claim 8 or 9, wherein the renewable energy system of the at least one UAV is powered using at least one of solar power, wind energy, thermal energy, fuel cells, combustion motor-generator sets, and microwave energy.

11. The system of any of the claims 8 to 10, wherein the plurality of UAVs are arranged in the belt configuration proximate the equator of the earth.

12. The system of any of the claims 8 to 11, wherein a position of at least one of the plurality of UAVs in the belt configuration is altered to improve an amount of renewable energy provided to the at least one UAV.

13. The system of any of the claims 8 to 12, wherein the plurality of UAVs are spaced apart based on respective communication capabilities of each of the plurality of UAVs.

14. The system of claim 13, wherein the plurality of UAVs comprise free space optical communications and the plurality of UAVs are spaced apart by 200 miles.

15. The system of claim 13, wherein the plurality of UAVs are spaced apart as far as possible to minimize a number of UAVs required to circle the earth.
